# EUROPEAN PATENT APPLICATION

(11) **EP 0 919 740 A1**
(43) Date of publication of application: **02.06.1999**
(21) Application number: 98109986.4
(22) Date of filing: 02.06.1998
(51) Int. Cl.: F16D 1/08

(54) **Coupling between a driving shaft and a motor shaft with the interposition of a bush that works by compression**

(30) Priority: 28.11.1997 IT MI972650
(71) Applicant: Motovario S.p.A., 40033 Casalecchio di Reno (BO) (IT)
(72) Inventor: Coroluppi, Walther, 40012 Calderara Di Reno (BO) (IT)
(74) Representative: La Ciura, Salvatore

(57) **Abstract**

Coupling between a driving shaft (1) and an entry shaft (2) of a device driven by said engine, where said entry shaft (2) presents an axial hole suitable to hold said driving shaft (1) with the interposition of a connection bush (3), and where there are elements (5) integral with said bush (3) suitable to lean against the lateral walls of said groove and means, integral with said driving shaft (1), suitable to act by compression on said means integral with said bush in order to drag into rotation said entry shaft (2).

## Description

The present invention proposes a coupling between a driving shaft and the entry shaft of a device like a ratiomotor or similar, of the type where between said driving shaft and entry shaft a connection bush is inserted, and that presents such characteristics that the bush works by compression.

More in details, the coupling according to the invention, of the type where the driving shaft is inserted in an axial hole provided in the entry shaft with the interposition of a connection bush and where said devices are constrained to rotation by means of keys, said bush presents a couple of wings outwardly protruding that are inserted in a corresponding housing provided in the entry shaft and where the key that constrains to rotation the various components is also inserted in said housing between said wings.

This configuration allows the bush to be subject only to compression stresses, avoiding phenomena of mutual sliding of the surfaces in touch, that would provoke local overheating, avoiding the necessity to resort, in order to realize the bush, to the use of specially resistant materials, and therefore expensive materials, and getting round the various inconveniences peculiar to the couplings known today.

The problems present in the today's direct coupling systems between a driving shaft and the entry shaft of a device driven by an engine are known.

Generally the driving shaft is inserted in an axial hole provided in the entry shaft and constrained to rotation by means of a key or a tongue that is inserted in a housing obtained partly in the driving shaft and partly in the entry shaft.

This configuration, of known type, is schematically shown in figures from 1a to 1c, that represent respectively the section of the entry shaft, the view of the driving shaft and the section, according to an orthogonal plane of the axis, of the assembled device.

This solution presents many inconveniences both of technical and managing type.

The coupling between the driving shaft and the hole of the entry shaft creates a contact metal to metal. It is not however a perfectly static contact, as, because of the tolerances and the manufacturing defects, it is practically impossible to obtain a perfect alignment and, because of these geometric errors, during the rotation a light sliding occurs continuously between the surfaces in contact of the two shafts.

The speed of this sliding is as higher as higher the number of revolutions of the engine is so that, because of friction between the two surfaces, this sliding, combined with the pressure existing between the surfaces themselves, develops a considerable quantity of heat provoking a local overheating that often causes the welding of the surfaces.

The consequences of all that are the following:
- The impossibility to disassemble the parts during the operations of maintenance and/or replacement of the engine after a certain period of working, because of the welding occurred between the surfaces;
- The risk of damaging the parts - especially the oil baffles - that are located near the coupling, caused by the high local rising of the temperature that occurs in this zone.

Another type of inconvenient peculiar of the systems of the known technique consists of the necessity to produce and store a high number of components, all different from each other.

In fact, in order to meet the demands of the market and allow the coupling with any type of existing engines, it is necessary to produce entry shafts with a high range of holes.

The entry shaft of the device, as for instance a ratiomotor, is therefore always the same, but just because of the necessity to allow the coupling with different types of driving shafts it is necessary to produce a wide range of shafts, with holes with different sizes.

It is therefore necessary to manage a high number of lots in low quantities, burdening the warehouse of the finished products with a considerable number of high cost components.

Also coupling systems that provide the use of a connection bush between the entry shaft and the driving shaft are known.

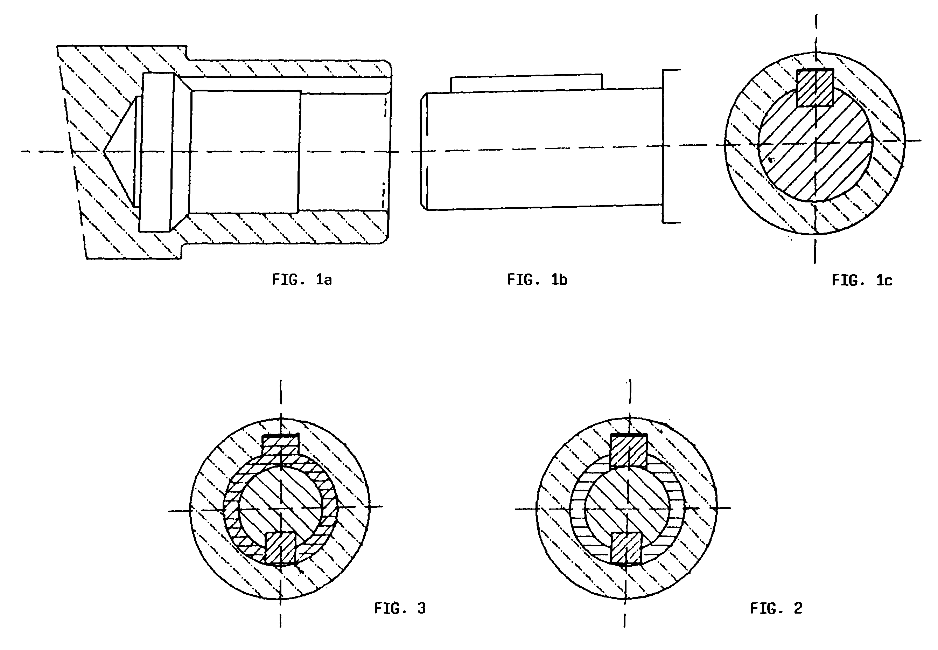

These known solutions, shown in a section orthogonal to the axis in figures 2 and 3, avoid the necessity to realize many types of entry shafts, as it is enough to store in the warehouse the bushes that allow the connection of these shafts to the various driving shafts.

However, in the forms presently known, this solution does not solve the technical problem.

In the version of figure 2, where there are a first tongue that constrains to rotation the driving shaft with the bush and a second tongue that constrains to rotation the bush with the entry shaft, the tongues are not fixed on the shaft and therefore follow the torsion deformations of the bush.

The housings for the tongues are all open and therefore the bush presents a low resistance to the torsion stress it is submitted to.

In the case of figure 3, where the connection tongue between the bush and the entry shaft is realized integral with the bush, this tongue works by cutting, with a kind of load that requires materials with rather high resistance and that therefore makes not advisable to realize bushes in nylon, that would be much cheaper than the corresponding bushes in steel or similar.

Besides, the housing of the tongue that connects bush and driving shaft is, as in the case of figure 2, all open, so that the bush presents a low resistance to the torsion stress.

For the above mentioned reasons, in the sector, the need of a coupling is sensed that allows the connection of an entry shaft to different types of driving shafts with a robust, resistant, cheap coupling, that can easily be produced also with materials like nylon or other plastic materials and that does not present the inconveniences known of the known technique.

According to the invention this problem is solved through a coupling between driving shaft and entry shaft that provides the use of a bush provided with two protruding wings that are inserted in a corresponding housing provided in the entry shaft and where between said wings a key is inserted that constrains to rotation the driving shaft with the other components.

With this configuration the stresses of the driving shaft are transmitted to the entry shaft through these wings of the bush, that work by compression and therefore can be realized in any suitable material without the risk of breaks, yielding and so on.

The present invention is now described in details, as a non limitative example, with reference to the enclosed figures, where:
- Figures 4a, 4b and 4c show, respectively, the axial section of an entry shaft according to the invention, the axial section of the relative bush and the section along a plane orthogonal to the previous one of the assembled unit;

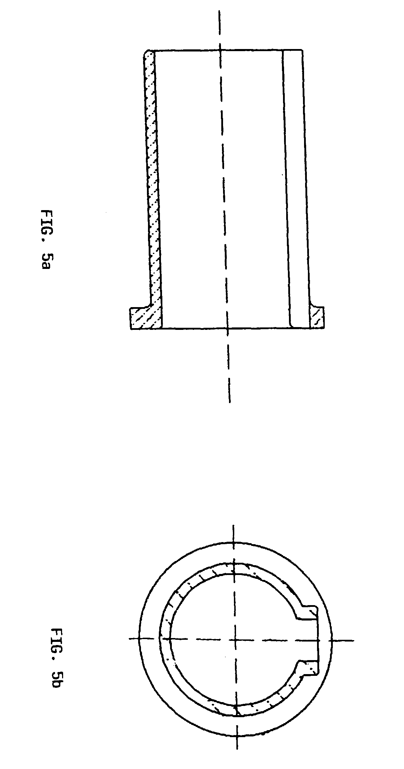

- Figures 5a and 5b are, respectively, the axial section and the section along a plane orthogonal to the axis of a bush for the coupling according to the invention;
- Figure 6a, 6b and 6c are, respectively, the axial section of an entry shaft, the axial section of the bush and the section along a plane orthogonal to the axis of the assembled unit, of a further preferred version of the coupling according to the invention.

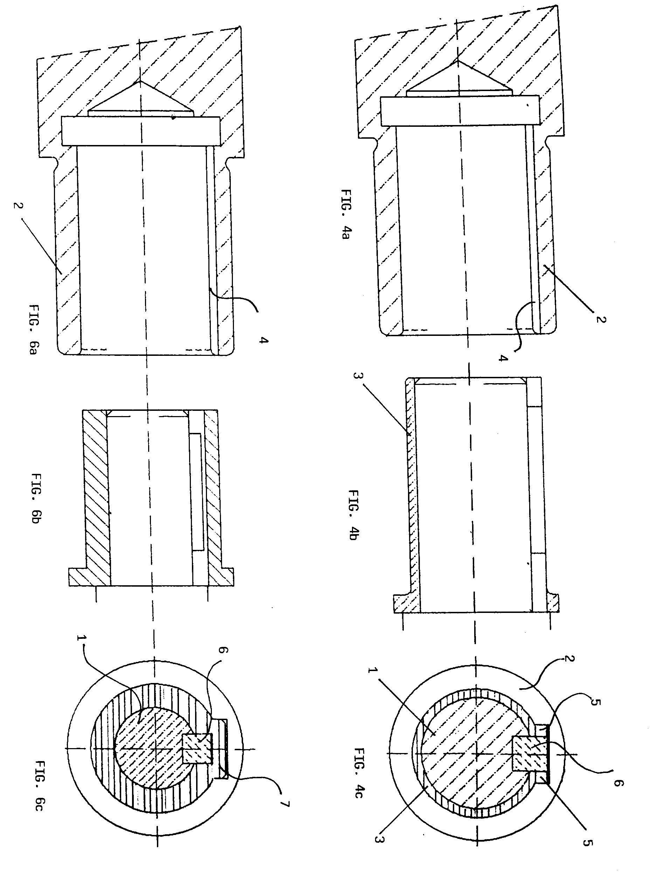

With reference to figure 4c, the coupling according to the invention includes a driving shaft 1, an entry shaft 2 provided with an axial hole for the insertion of the driving shaft and a connection bush shown with 3.

In the wall of the entry shaft 2 a groove 4 is obtained, inside, parallel to the axis.

According to the invention, the bush 3 presents a cutting parallel to the axis with the edges folded outwardly that define a couple of wings 5.

The wings 5 are destined to be inserted in the groove 4 of the entry shaft, leaning against the lateral walls of it.

The width of the groove 4 is greater than the total thickness of the two wings, between which therefore a certain space remains.

In this space part of a key 6 is inserted, that, for the remaining part, is inserted in a corresponding housing of shaft 1.

The key 6 constrains therefore to rotation the shaft 1 and the shaft 2, with the interposition of the connection bush 3 and of its wings 5.

With this configuration the stresses that the driving shaft transmits to the wing are transmitted from the latter to the entry shaft 2 through the walls of the bush, that therefore do not work by cutting but only by compression.

This solution allows then to use, for the realization of the bush, any suitable material, like for instance nylon, or sintered metal appropriately soaked with lubricating material.

Substantially a very robust coupling is obtained, that, removing the previously mentioned mechanical problems, privileges the choice of a material that allows to achieve the component with reduced costs.

The coupling according to the invention presents therefore many advantages and in particular:
- It assures the separation between the surfaces of the shaft and the hole through the wall of the bush, that, as it can be realized with the most appropriate material, avoids the phenomenon of the welding between the surfaces;
- It avoids the formation of local overheating that could damage the parts located near the connection with greater duration of the junk rings;
- It allows always to disassemble the coupling;
- It assures a greater resistance of the whole as the key of the driving shaft works on the side of the wings of the bush, stressing them to compression, removing in this way the cutting breaks peculiar of this type of coupling.

According to another preferred version of the invention, the coupling can be realized as shown in figures 61, 6b and 6c, providing in the bush a protruding part, shown in figure 6c with number 7, that completely fills the corresponding housing 4 in the entry shaft 2.

In this case the key 6 of the driving shaft 1 constrains to rotation the shaft and the bush, but remains completely included inside the thickness of the bush, without penetrating into the housing 4 of the entry shaft, so that it does not interrupt the continuity of the material of the bush in this zone.

With this configuration the outer wing, integral with the bush, works by cutting, but on a very wide section, that has the appropriate size and is able to resist efficiently to the stresses developed during the rotation.

An expert of the branch could then provide many other modifications and variations, that shall however be always included in the scope of the present invention.

## Claims

1. Coupling between a driving shaft and an entry shaft of a device driven by said engine, where said entry shaft presents an axial hole suitable to hold said driving shaft with the interposition of a connection bush, characterized by the fact that it provides elements integral with said bush suitable to lean against the lateral walls of said groove and means, integral with said driving shaft suitable to act by compression on said means integral with said bush in order to drag into rotation said entry shaft.

2. Coupling between a driving shaft and an entry shaft of a device, said entry shaft being provided with an axial hole suitable to hold said driving shaft with the interposition of a connection bush, said entry shaft presenting on the inner wall of said hole at least a groove parallel to the axis characterized by the fact that:
• Said bush presents, outwardly, at least a protruding wing that is inserted in said groove of the entry shaft in order to constrain it to rotation;
• A key is provided that is inserted partly in a housing present in said driving shaft and partly in said groove, in order to constrain said driving shaft to rotation with said bush and with said entry shaft, said key working by compression on said wing.

3. Coupling according to claim 2, characterized by the fact that said bush presents two protruding wings suitable to be inserted in said groove of the entry shaft leaning against the opposite walls of said groove, the total thickness of said wings being lower than the width of said groove, and mechanical means being provided suitable to be inserted between said wings and to constrain at the same time to rotation said bush and driving shaft.

4. Coupling according to the previous claims, characterized by the fact that said bush is in nylon, in sintered steel or other material.

5. Coupling according to the claims 2 and 3, characterized by the fact that said bush is in sintered metal soaked with lubricating material.

6. Coupling between a driving shaft and an entry shaft with the interposition of a connection bush, said bush being constrained to rotation with said driving shaft by means of a key, characterized by the fact that it provides in the wall of said hole of the entry shaft at least a groove parallel to the axis, said bush presenting outwardly a relief part suitable to be inserted in said groove, said key that constrains to rotation said driving shaft and said bush being completely included within the thickness of the bush, without protruding within said groove in the entry shaft.

7. Coupling between a driving shaft and an entry shaft of a device like a ratiomotor or similar through the interposition of a bush working by compression as described and shown.
